# DEMANDE DE BREVET EUROPEEN

(11) **EP 2 090 549 A1**
(43) Date de publication de la demande: **19.08.2009**
(21) Numéro de dépôt: 08100925.0
(22) Date de dépôt: 25.01.2008
(51) Int. Cl.: C03B 23/025

(54) **Bombage de feuilles de verre**

(71) Demandeur: AGC Flat Glass Europe SA, 1170 Bruxelles (Watermael-Boitsfort) (BE)
(72) Inventeur: MEYERS, Michel, c/o AGC Flat Glass Europe SA, 6040 Jumet (BE); AXENSALVA, Renaud, c/o AGC Flat Glass Europe SA, 6040 Jumet (BE)
(74) Mandataire: Le Vaguerèse, Sylvain Jacques

(57) **Abrégé**

La présente invention concerne le bombage de feuilles de verre.
Selon l'invention les feuilles de verre disposées sur un cadre présentant sensiblement la forme de la périphérie de la feuille à la fin du processus, sont introduites dans un four qui les porte à une température voisine de celle de leur ramollissement, les feuilles, partiellement bombées, sont soumises à la pression de moyens qui s'appliquent progressivement par un mouvement comportant une rotation sur une partie significative de la surface des feuilles.

## Description

La présente invention concerne les techniques de bombage de feuilles de verre destinées notamment aux véhicules automobiles.

Le bombage des feuilles de verre à partir de feuilles planes comporte systématiquement une phase de ramollissement par élévation de température. Au-delà de cette caractéristique commune à toutes les techniques, une grande variété de moyens sont mis en oeuvre pour parvenir aux formes souhaitées.

Une part importante des vitrages automobile, lorsque les courbures sont importantes, par exemple pour les pare-brise, est obtenue par une technique de bombage essentiellement sinon exclusivement par gravité. La, ou les feuilles de verre traitées sont placées sur un "moule" ou "cadre", ou encore "squelette", qui soutient les feuilles de verre à leur périphérie en leur conférant le profil recherché. Dans ces techniques, en dehors des parties des feuilles en contact avec le moule, la forme du verre n'est commandée que par le jeu du ramollissement du verre et sa déformation sous son propre poids.

On comprend que l'obtention d'une forme répondant exactement à la configuration réclamée par le constructeur, en dehors de la zone périphérique, soit délicate et d'autant plus que les feuilles traitées sont de dimensions plus grandes. Les écarts constatés concernent notamment la zone centrale. Ces écarts par rapport à la forme nominale peuvent atteindre plusieurs millimètres dans la profondeur de bombage. Si ces écarts ne sont en règle générale pas préjudiciables à la qualité optique des vitrages, pour certaines applications il n'en est pas de même. En particulier ces écarts de forme rendent difficile l'usage de certains modèles d'essuie-glace, ou sont incompatibles avec l'utilisation de ces vitrages pour l'affichage de type "tête haute" ("head-up display").

En contrepartie de ces difficultés, un des grands avantages des techniques de bombage par gravité, est de limiter le contact du verre chaud avec le cadre aux parties périphériques. Les traces qui s'impriment sur les feuilles sont alors peu gênantes, d'autant qu'elles se situent dans les parties qui correspondent aux zones de collage des vitrages.

D'autres techniques s'efforcent de conférer la forme très précisément en procédant au formage avec un moule en contact avec la totalité de la surface de la feuille de verre ramollie. Ces techniques comprennent de multiples modalités. Dans les plus usuelles, les feuilles de verre supportées à leur périphérie par un cadre comme dans les techniques de bombage par gravité, dont elles empruntent éventuellement quelques étapes, sont appliquées sur le moule sur toute leur surface. L'application sur la surface de formage peut être facilitée par un jeu d'aspiration ou de soulèvement au moyen de jets gazeux appropriés.

Selon la forme recherchée, notamment lorsque la courbure transversale de la feuille est très forte, le cadre utilisé peut être articulé sur ses côtés pour suivre au mieux les déformations de la feuille de verre au cours du processus. Dans ce cas la feuille de verre entre en contact avec le moule pleine surface par la zone centrale. Les pressions exercées par ce moule sont les plus fortes dans cette zone.

Dans tous les cas, que le cadre soit articulé ou non, la surface du moule en contact avec la feuille de verre reste inchangée au cours du processus.

Ces techniques ont en commun de modifier la surface du verre en contact avec le moule. Le poli et l'état de surface qui sont caractéristiques des feuilles bombées par gravité sont alors en partie altérés. Pour minimiser les défauts dus à ce contact, la surface est protégée ordinairement par l'interposition de moyens, notamment de tissus soigneusement choisis, et ou par la présence de poudres revêtant momentanément la surface de la feuille de verre au contact du moule.

Dans ces techniques de bombage comprenant le contact avec le moule sur la totalité de la surface de la feuille de verre, il est difficile d'éviter certains défauts optiques qui sont d'autant plus dommageables qu'ils se situent dans les zones de vision de ces vitrages. Par leur mode de fonctionnement le contact est même le plus intense au centre des feuilles, et les défauts les plus sensibles se trouvent donc dans les parties des feuilles où ils sont les plus gênants.

Un but de l'invention est de proposer une technique qui présente simultanément les avantages liés aux modes de formage par gravité et ceux utilisant le pressage sur toute la surface.

Selon l'invention il est proposé une technique de bombage de feuilles de verre dans laquelle la ou les feuilles portées par un cadre qui présente à la fin du processus le profil périphérique recherché, sont introduites dans un four pour les amener progressivement à des températures voisines de celles de ramollissement du verre. A ce stade elles subissent de préférence un premier bombage par gravité.

Pour obtenir le meilleur état de surface possible il est en effet avantageux de commencer le formage sans intervention des moyens de pressage. Ce formage est avantageusement conduit aussi loin que possible pour minimiser l'opération ultérieure de pressage. Autrement dit, le bombage par gravité aboutit à une forme qui diffère assez peu de la forme finale recherchée.

Les feuilles dans cet état sont soumises à la pression de moules, entrant progressivement en contact avec le verre, le contact s'opérant au moins sur une fraction significative de la surface totale du verre.

Dans la suite de la description il est fait indifféremment référence au bombage d'une ou deux feuilles de verre. Pour les vitrages feuilletés, et notamment pour les pare-brise, le bombage est très généralement effectué simultanément sur les deux feuilles de verre qui sont superposées. Cette façon de procéder est la plus usuelle pour atteindre à un bon appariement des feuilles. Les modalités qu'il s'agisse du bombage d'une feuille ou de celui de deux feuilles reste sensiblement de même nature. Lorsque deux feuilles sont traitées les conditions thermiques dans le four font en règle générale que la feuille située au-dessus se trouve à une température plus élevée le rayonnement étant en règle générale plus intense par les moyens de chauffage situés sur la voûte du four. Dans ces conditions, il est particulièrement important de contrôler la température superficielle comme indiqué plus loin pour éviter le risque de marquage de la surface des feuilles au contact des moules. Dans tous les cas les dispositions selon l'invention permettent de minimiser ces risques.

Le contact progressif des moules avec la surface du verre, représente avantageusement au moins 10% de cette surface, de préférence au moins 20% de cette surface, et de façon particulièrement préférée au moins 30%.

L'invention se distingue des techniques de bombage par gravité dans lesquelles, pour accentuer certaines courbures, un pressage localisé est imposé aux feuilles de verre suivant ce qui s'apparente à une ligne de "pliage". Dans ces techniques la surface de contact avec le verre reste très faible par rapport à la surface globale des feuilles. Au contraire selon l'invention une part significative de cette surface est concernée par la pression des moules utilisés. Cette part peut s'étendre pratiquement à la totalité de cette surface.

Pour les vitrages présentant au moins un axe de symétrie, comme pour les pare-brise ou les lunettes arrière, l'action des moules sur les feuilles de verre est également dirigée de façon symétrique et simultanée.

La maîtrise du galbe de bombage est d'autant plus nécessaire que l'on s'écarte de la périphérie du vitrage, autrement dit lorsque l'on s'éloigne des parties dont la configuration est contrôlée par la forme du cadre. Dans les techniques de pressage antérieures, le contact de la feuille de verre avec le moule débute ordinairement par les parties centrales, pour gagner la périphérie en fin du processus.

La pression exercée par les moules selon l'invention opère de manière progressive, et de manière préférée, en partant de la périphérie des feuilles de verre ou de zones voisines de la périphérie, pour se rapprocher des zones centrales.

Selon un mode de réalisation de l'invention, la zone centrale des feuilles de verre n'est pas soumise à la pression des moules de surface, de telle sorte que cette zone n'est pas exposée aux risques de formation de défauts qui peuvent accompagner le contact du verre avec les moules.

Comme indiqué précédemment, la mise en oeuvre des moules selon l'invention est aussi de préférence telle que le contact avec les feuilles de verre s'effectue à un stade dans lequel une part significative du bombage est préalablement obtenu par gravité. En d'autres termes l'action des moules de surface dans les techniques selon l'invention est de préférence limitée pour ce qui concerne la mise en forme finale des feuilles de verre. En d'autres termes encore la mise en forme ne nécessite avantageusement qu'une pression limitée ce qui garantit contre les défauts optiques même dans les zones de contact.

De préférence selon l'invention la mise en forme des feuilles par l'action de pression des moules n'entraîne pas un approfondissement du bombage excédant 8mm, de préférence 5mm, et de façon particulièrement préférée reste inférieur à 3mm en tout point de la surface de contact des moules et des feuilles de verre.

Il va de soi que l'action de pressage s'exerce de telle sorte que le bombage est nécessairement prolongé par cette action. Les feuilles de verre au moment de l'action des presses ne doivent pas avoir "dépassé" la forme nominale recherchée, quelle que soit la zone du vitrage considérée. En d'autres termes, le pressage ne peut qu'accentuer le bombage entrepris préalablement.

Pour que la pression exercée par les moules sur les feuilles soit aussi faible que possible, il est avantageux selon l'invention de procéder à l'action des moules à des températures telles que les feuilles de verre soient encore en état de bombage par gravité, ou à une température très légèrement inférieure.

Dans la pratique la plus usuelle, la montée en température des feuilles conduit à un bombage par gravité préalable à la pression par les moules, en un temps où la température est dans une phase de croissance. Le chauffage des feuilles dans le four s'effectue essentiellement par rayonnement et convection. Dans ce mode, le matériau verrier, même si sa conduction thermique s'accroît avec la température, n'équilibre pas instantanément les températures superficielles et celle au coeur des feuilles. La température en surface reste en règle générale supérieure.

Le pressage peut être conduit dans ces conditions, la différence de température en question étant relativement faible. D'ordinaire cette différence ne dépasse pas quelques degrés. Néanmoins selon l'invention il apparaît avantageux de procéder au pressage au moyen des moules lorsque la température en surface et au coeur des feuilles de verre est pratiquement la même, voire légèrement inférieure. En opérant dans ces conditions le risque de marquage des feuilles par le contact avec les moules est encore amoindri.

La température s'équilibre lorsque après être passée par un maximum en surface le chauffage est ralenti et la température en surface ne progresse plus, voire régresse un peu.

L'application des moules les met en contact les feuilles de verre qui se trouvent à une température plus élevée de quelques dizaines de degrés. Il n'y a à ce stade aucun risque de collage du verre. La température des moules est aussi suffisamment élevée pour qu'il n'y ait pas de choc thermique engendrant des tensions excessives. Néanmoins la différence de température est suffisante pour que le refroidissement du verre prévienne de déformations importantes ultérieures dans les zones mises en contact avec les moules. De cette façon les moules confèrent aux feuilles de verre la forme précise qui correspond à celle des moules.

Après l'application des moules, les feuilles sont évacuées sur le cadre utilisé pour être complètement refroidies.

Les modifications de forme, passé le contact avec les moules, ne peuvent affecter le cas échéant que les zones qui ne sont pas soumises à la pression des moules. Une modification significative n'intervient le cas échéant que lorsqu'une partie relativement modeste de la surface des feuilles entre effectivement en contact avec les moules. Dans ce cas les zones non touchées peuvent rester à des températures suffisantes pour que le verre soit encore susceptible de poursuivre son bombage par gravité.

Dans tous les cas selon l'invention, les modifications de forme postérieures à l'application des moules, restent d'une ampleur limitée, et peuvent être relativement bien contrôlées. Il en résulte que les vitrages bombés suivant l'invention présentent dans l'ensemble une très bonne conformité avec les formes correspondant au cahier des charges des constructeurs. En pratique cette conformité peut être telle qu'en tout point de la surface les écarts de profondeur de bombage sont inférieurs à ±2mm et le plus souvent inférieurs à ±1mm.

Par ailleurs si le risque de défauts optiques dans les zones en contact avec les moules peut être minimisé, comme indiqué précédemment, pour les zones qui ne sont pas en contact avec les moules, les défauts optiques sont pratiquement exclus. En aucun point de ces zones qui n'ont subi que le bombage par gravité il n'apparaît de défauts de plus de 75 milli-dioptries, et même de plus de 50 milli-dioptries.

L'invention est décrite de façon détaillée dans la suite, en faisant référence aux planches de dessins dans lesquelles :
- les figures 1a, 1b, 1c représentent de façon schématique en coupe le mode de bombage de l'art antérieur;
- les figures 2a, 2b, 2c représentent par comparaison le principe de mise en oeuvre du bombage selon l'invention ;
- la figure 3 illustre en perspective schématique un positionnement des demi-presses selon l'invention.

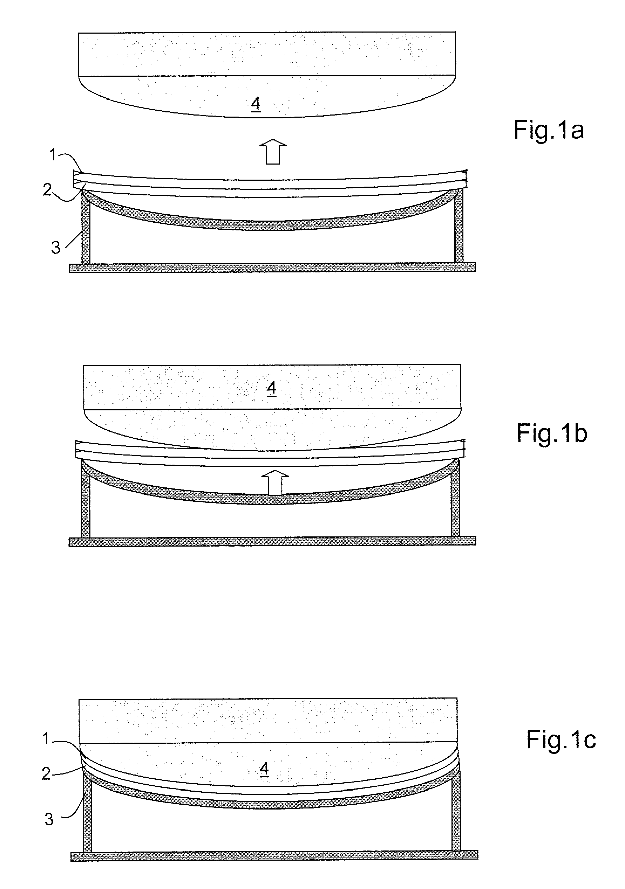

Aux figures 1a, 1b et 1c sont représentés de façon schématique trois moments du mode de bombage traditionnel comprenant l'utilisation de moyen de pressage.

A la figure 1a les feuilles de verre 1 et 2 sont disposées sur un cadre 3. Les feuilles prennent appui à leur périphérie sur ce cadre, lequel peut être fixe ou comporter des parties latérales articulées dont le mouvement permet de suivre les déformations du verre lorsque le bombage périphérique comporte des courbures accentuées.

Toujours en 1a, on a représenté les feuilles ayant subi un premier bombage par gravité. Dans l'art antérieur il semble que ce bombage lorsqu'il existe reste relativement limité, l'essentiel du bombage s'effectuant au contact de la presse 4 qui à ce stade se situe à distance des feuilles de verre.

En 1b un mouvement relatif du cadre 3 et de la presse 4, représenté par une flèche ascendante amène les feuilles de verre au contact de cette dernière. Le mouvement en question est le plus généralement une élévation du cadre 3 éventuellement accompagnée d'un soulèvement des feuilles facilité par exemple par une aspiration à partir de la presse ou de sa périphérie, ou par un soufflage ascendant sous les feuilles, ou encore les deux à la fois.

Dans tous les cas les feuilles qui ne sont que partiellement bombées entrent nécessairement en contact avec la presse 4 par leur partie centrale.

En 1c, le mouvement relatif cadre/presse et /ou celui imposé aux feuilles par les courants gazeux d'aspiration ou de soufflage, finissent d'appliquer les feuilles de verre sur la presse 4. Les bords des feuilles sont dans ce cas appliqués en dernier sur la presse.

La mise en forme étant achevée, les feuilles sont soit reposées sur le cadre 3 pour être évacuées vers une zone de refroidissement qui fige la forme imposée, soit, dans d'autres modes de mises en oeuvre, elles sont maintenues par aspiration sur la presse, et sont ultérieurement déposées sur un deuxième cadre qui les transporte de la même façon dans les zones de refroidissement.

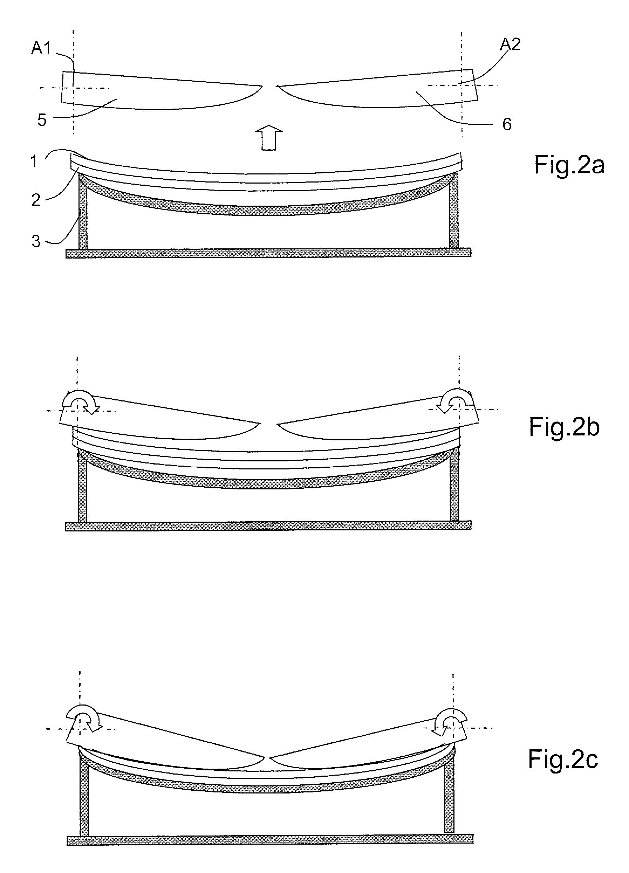

Les figures 2a, 2b et 2c montrent de manière analogue, pour faciliter la comparaison, la mise en oeuvre de l'invention suivant les différents moments correspondants.

En 1a le cadre 3 portant les feuilles 1 et 2 se situe à distance de deux demi-presses 5 et 6. Ces demi-presses sont articulées en rotation autour des axes A1 et A2. Ces axes sont de direction sensiblement parallèle aux bords des feuilles de verre, ou sensiblement parallèle à l'axe du four.

Comme précédemment les feuilles sont chauffées jusqu'à atteindre le ramollissement. Les feuilles fléchissent sous leur propre poids. Selon l'invention il est préféré de faire en sorte que le bombage par gravité initial soit aussi avancé que possible avant l'opération de pressage. Néanmoins un bombage par gravité limité n'est pas exclu.

Le choix du bombage préalable très avancé permet de minimiser la déformation ultérieure due au pressage et donc participe à la réduction des défauts qui peuvent résulter de ce pressage.

Si les conditions de ce bombage préalables sont bien maîtrisées, la déformation finale de pressage est limitée, et donc les efforts de déformation nécessaires sont également limités.

En 2b la mise en contact par mouvement relatif des feuilles de verre et des demi-presses initialement relevées en position "haute", amène ce contact initial sur les bords des feuilles et non en leur centre comme dans les techniques antérieures. Une fois ce contact réalisé, les demi-presses 5 et 6 sont mises en rotation de sorte que leurs faces viennent progressivement au contact des feuilles de verre. L'effort de formage se distribue ainsi sur la totalité de la face supérieure des feuilles, et les zones les plus voisines du centre ne supportent pas un effort plus important.

Lorsque les demi-presses ont atteint la position "basse" correspondant à la forme finale des feuilles, le mouvement de rotation est interrompu.

Comme représenté sur les figures 2, les demi-presses peuvent recouvrir une part importante de la surface des feuilles sans nécessairement couvrir toute cette surface.

La part de surface traitée par pressage peut être choisie en fonction de l'intensité du bombage réalisé au moyen de ces presses. Plus le bombage est intense, plus il est préférable d'avoir un contact recouvrant une part importante des feuilles. Dans ces conditions la zone limitée qui n'est pas en contact avec les presses se trouve néanmoins bien encadrée par les zones voisines qui sont en contact des presses. Les écarts avec les formes de consigne sont donc, de toute manière, minimisés.

Quand comme sur la figure 2 les presses recouvrent l'essentiel des feuilles il est préférable que la partie qui n'est pas au contact de celles-ci soit aussi limitée que possible. Dans la pratique les presses étant à une température différente de celle des feuilles de verre il est préférable de faire en sorte que le conditionnement thermique des feuilles de verre ne fasse pas apparaître de différence significative entre les parties au contact des presse et celles qui n'y sont pas. En réduisant la zone entre les deux demi-presses la proximité des zones au contact de celles-ci fait que les échanges thermiques sont pratiquement les mêmes sur toute la surface. Le réglage de la température des presses pour parvenir aux meilleures conditions peut aussi être contrôlé par des moyens notamment de chauffage intégrés à ces presses. Dans le corps de celles-ci il est possible notamment de disposer, par exemple, des réseaux électriques chauffants.

Lorsque le mouvement des presses est achevé, elles sont de nouveau écartées des feuilles par un mouvement inverse des précédents. Les feuilles toujours portées par le cadre 3 sont évacuées pour être dirigées vers une zone de refroidissement.

Comme dans les techniques antérieures de pressage de verre chaud, il est important de faciliter un contact qui ne marque pas la surface des feuilles. Si comme indiqué il est avantageux de procéder sur les feuilles dont la surface est à température un peu moindre que celle au coeur des feuilles, il est aussi important de disposer à l'interface des moyens connus permettant d'éviter ce marquage. Parmi ces moyens les plus répandus sont le recouvrement des presses par des tissus antiadhésifs, par exemple des tissus céramiques ou métalliques. Il peut s'agir aussi de l'utilisation de poudres inertes ou de revêtements céramiques disposés à la surface de contact avec les feuilles.

Lorsque les deux presses laissent entre elles une zone peu étendue sur laquelle leur action ne s'exerce pas sur les feuilles de verre, le revêtement des surfaces de contact par un tissu adapté peut être réalisé au moyen d'une pièce couvrant simultanément les deux presses. Dans ce cas le tissu est maintenu tendu de telle sorte qu'il couvre l'espace entre les deux presses. Cette façon de procéder évite tout risque de discontinuité, ou marque de transition, à la limite des zones des feuilles en contact avec les presses et celles qui ne le sont pas.

Il est important selon l'invention que l'action des presses se développe de façon bien symétrique.

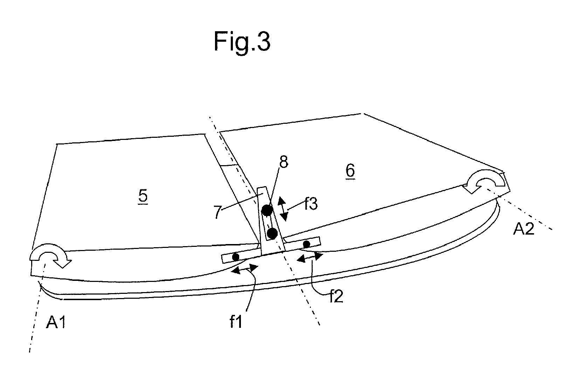

Pour cela, le mouvement des demi-presses 5 et 6 doit être bien coordonné. Celles-ci peuvent être solidarisées de manière schématisée à la figure 3. Les deux demi-presses 5 et 6 sont reliées au moyen d'un guide 7. Ce guide 7 est articulé de manière coulissante sur les demi-presses 5 et 6. Le mouvement est indiqué par les flèches f1 et f2. L'articulation avec le coulisseau se fait en des points des demi-presses éloignés des axes de rotation.

La pièce 7 est par ailleurs guidée dans un mouvement vertical selon la direction de la flèche f3, par coulissement sur un élément 8 solidaire du bâti non représenté qui supporte l'ensemble des demi-presses.

Le mouvement de rotation des demi-presses est de avantageusement commandé de manière solidaire avec celui de rapprochement du cadre et des feuilles.

Le cas échéant le mouvement peut être le résultat de la réaction de l'application des presses sur les feuilles. Dans ce cas il est nécessaire de doter les demi-presses de contrepoids non représentés qui sans le contact avec les feuilles maintiennent les demi-presses en position "haute". Toujours dans ce cas l'équilibrage des contrepoids doit être réglé de telle sorte que l'effort de réaction soit très modeste de manière à ne pas devoir exercer une pression trop importante pour opérer le mouvement de rotation.

Bien évidemment le mouvement de rotation peut également être mis en oeuvre par des moyens ne sollicitant pas la pression sur les feuilles de verre.

## Revendications

1. Procédé de bombage de feuilles de verre dans lequel les feuilles disposées sur un cadre présentant sensiblement la forme de la périphérie de la feuille à la fin du processus, le cadre portant les feuilles de verre est introduit dans un four qui les porte à une température voisine de celle de leur ramollissement, les feuilles, partiellement bombées, sont soumises à la pression de moyens qui s'appliquent progressivement par un mouvement comportant une rotation sur une partie significative de la surface des feuilles.

2. Procédé selon la revendication 1 dans lequel la surface de contact avec les moyens de pression ne représente pas moins de 10%, de préférence 20%, et de façon particulièrement préférée 30% de la surface totale des feuilles de verre.

3. Procédé selon l'une des revendications précédentes dans lequel la pression s'exerce progressivement à partir de zones périphériques ou proche de la périphérie vers la partie centrale de la feuille.

4. Procédé selon l'une des revendications précédentes dans lequel les moyens de pression progressive comprennent deux éléments disposés de part et d'autre de l'axe de symétrie du vitrage, les deux éléments agissant de manière simultanée et symétrique.

5. Procédé selon la revendication 6 dans lequel les moyens de pression entrent progressivement en contact avec la surface des feuilles en partant des bords de celles-ci sensiblement au niveau où les feuilles sont supportées par le cadre.

6. Procédé selon la revendication 5 dans lequel la pression est exercée de telle sorte que la modification de la forme consécutive à cette pression, n'entraine pas un approfondissement du bombage de plus de 8mm en tout point de la surface, et de préférence pas supérieur à 5mm.

7. Procédé selon l'une des revendications précédentes dans lequel l'application progressive de la pression est conduite alors que les feuilles de verre sont dans des conditions de température telles que le bombage par gravité se poursuit simultanément.

8. Procédé selon l'une des revendications précédentes dans lequel l'application progressive de la pression est conduite alors que la température de la feuille de verre en surface est au plus égale à la température au coeur de la feuille.

9. Procédé selon la revendication 8 dans lequel l'application progressive de la pression s'effectue dans une zone de l'installation dans laquelle la température globale de la feuille ne s'accroît plus.

10. Feuille de verre bombée obtenue par le procédé selon l'une des revendications précédentes.

11. Feuille de verre bombée selon la revendication 10 présentant une surface en tout point sans irrégularités de profondeur de bombage de plus de ±2mm et de préférence de plus de ±1mm par rapport aux formes de consigne.

12. Feuille de verre bombée selon la revendication 10 ou la revendication 11, dans la quelle les parties superficielles qui n'entrent pas en contact avec les moyens de pression ne présentent pas d'irrégularités optiques de plus de 75millidioptries, et de préférence pas plus de 50millidioptries.
